# EUROPÄISCHE PATENTANMELDUNG

(11) **EP 4 668 492 A1**
(43) Veröffentlichungstag der Anmeldung: **24.12.2025**
(21) Anmeldenummer: 24182471.3
(22) Anmeldetag: 17.06.2024
(51) Int. Cl.: H01R 4/18, H01R 43/048, H01R 4/62, H01R 43/02

(54) **KABELANORDNUNG SOWIE VERFAHREN UND KABELKONFEKTIONIERUNGSVORRICHTUNG ZU DESSEN HERSTELLUNG**

(71) Anmelder: Rosenberger Hochfrequenztechnik GmbH & Co. KG, 83413 Fridolfing (DE)
(72) Erfinder: Gruber, Andreas, 83413 Fridolfing (DE)
(74) Vertreter: Lorenz, Matthias

(57) **Zusammenfassung**

Die vorliegende Erfindung betrifft eine Kabelanordnung. Die vorliegende Erfindung betrifft ferner ein Verfahren zur Herstellung einer Kabelanordnung. Die vorliegende Erfindung betrifft schließlich eine Kabelkonfektionierungsvorrichtung zur Herstellung einer Kabelanordnung.

Eine Kabelanordnung (4) weist ein Kabel (3) mit Kabellitzen (2) und ein Kontaktelement (1) auf. Ein Bereich (5) des Kontaktelements (1), der relativ zu einer Längsachsrichtung L_{KL} der Kabellitzen (2) seitlich zu den Kabellitzen (2) angeordnet ist, ist mit den angrenzenden Kabellitzen (2) stoffschlüssig verbunden. Der Bereich (5) weist eine kreisförmige Quererstreckung und eine Längserstreckung auf, die im Wesentlichen orthogonal zu einer Längsachse L_{KL} der Kabellitzen (2) orientiert ist. Der Bereich (5) ist ein zusammenhängender Bereich (5) des Kontaktelements (1).

## Beschreibung

### GEBIET DER ERFINDUNG

Die vorliegende Erfindung betrifft eine Kabelanordnung aufweisend ein Kabel mit Kabellitzen und ein Kontaktelement, wobei ein Bereich des Kontaktelements, der relativ zu einer Längsachsrichtung der Kabellitzen seitlich zu den Kabellitzen angeordnet ist, mit den angrenzenden Kabellitzen stoffschlüssig verbunden ist, gemäß dem Oberbegriff des Patentanspruchs 1.

Die Erfindung betrifft außerdem ein Verfahren zur Herstellung der Kabelanordnung.

Die Erfindung betrifft schließlich auch eine Kabelkonfektionierungsvorrichtung zur Herstellung einer Kabelanordnung.

### TECHNISCHER HINTERGRUND

Bei der Übertragung von elektrischer Leistung und/oder Datensignalen sind elektrische Steckverbinder in unterschiedlichsten Ausführungen im Einsatz. Bei einem elektrischen Kabelsteckverbinder sind die einzelnen Leiter des Kabels mit zugehörigen Kontaktelementen des Steckverbinders jeweils elektrisch und mechanisch verbunden. Für Steckverbinder zur Übertragung von elektrischer Leistung, für so genannte Hochvolt- oder Hochstrom-Steckverbinder, sind stoffschlüssige Verbindungen mit einer hohen mechanischen Festigkeit erforderlich. Aufgrund der hohen Stückzahl, in der Hochvolt- oder Hochstrom-Steckverbinder hergestellt werden, ist außerdem eine hohe Wirtschaftlichkeit in der Fertigung geboten. Schweißverbindungen, bei denen die beiden Bauteile zumindest unter Verwendung von Wärme und optional unter Verwendung von Druck miteinander stoffschlüssig verbunden werden, können derartige Anforderungen erfüllen. Zum Schweißen von Kabellitzen eines Kabels an ein Kontaktelement für Hochspannungsanwendungen sind unterschiedliche Schweißverfahren im Einsatz, wie beispielsweise Laserschweißen, Ultraschallschwei-ßen oder thermisches Widerstandsschweißen.

Der Erfinder der Anmelderin hat in Erfahrung gebracht, dass für das stoffschlüssige Verbinden eines Kontaktelements aus einem Buntmetall, vorzugsweise aus Kupfer oder einer Kupferlegierung, und Kabellitzen aus Aluminium oder einer Aluminiumlegierung die bekannten Schweißverfahren für Hochspannungsverbindungen nur ungenügend geeignet sind. Der unterschiedliche Schmelzpunkt und die unterschiedlichen Absorptionsspektren der Materialpaarung, das Erfordernis teurer Schweißzusatzwerkstoffe und vor allem die ungenügende verfahrenstechnische lokale Fokussierung der Schweißung führen bei gängigen Schweißverfahren im Hochspannungsbereich zu keiner technisch und/oder wirtschaftlich befriedigenden Lösung.

Dies ist ein Zustand, den es zu verbessern gilt.

### BESCHREIBUNG DER ERFINDUNG

Vor diesem Hintergrund liegt der vorliegenden Erfindung die Aufgabe zugrunde, eine Kabelanordnung aus einem Kabel mit Kabellitzen und einem Kontaktelement, in der eine stoffschlüssige Verbindung zwischen den Kabellitzen und dem Kontaktelement mit einer ausreichenden mechanischen Festigkeit verwirklicht ist, und ein kostengünstiges Verfahren sowie eine geeignete Kabelkonfektionierungsvorrichtung zu deren Herstellung anzugeben.

Erfindungsgemäß wird diese Aufgabe durch eine Kabelanordnung mit den Merkmalen des Patentanspruchs 1, durch ein Verfahren zur Herstellung einer Kabelanordnung mit den Merkmalen des Patentanspruches 10 und durch eine Kabelkonfektionierungsvorrichtung zur Herstellung einer Kabelanordnung mit den Merkmalen des Patentanspruchs 13 gelöst.

Demgemäß ist vorgesehen:
Eine Kabelanordnung aufweisend
   - ein Kabel mit Kabellitzen und
   - ein Kontaktelement,
   - wobei ein Bereich des Kontaktelements, der relativ zu einer Längsachsrichtung der Kabellitzen seitlich zu den Kabellitzen angeordnet ist, mit den angrenzenden Kabellitzen stoffschlüssig verbunden ist,
   - wobei der Bereich eine kreisförmige Quererstreckung und
   - eine Längserstreckung aufweist, die zumindest im Wesentlichen orthogonal zu einer Längsachse der Kabellitzen orientiert ist,
   - der Bereich ein zusammenhängender Bereich des Kontaktelements ist.

Die der vorliegenden Erfindung zugrunde liegende Erkenntnis/Idee besteht darin, mittels eines Schweißwerkzeuges mit einer rotationsymmetrischen Querschnittsgeometrie seitlich zur Längserstreckung des Kabels und des Kontaktelements eine lokal fokussierte stoffschlüssige Verbindung zwischen dem Kontaktelement und zumindest den an das Kontaktelement seitlich angrenzenden Kabellitzen des Kabels zu realisieren. Auf diese Weise ist ein Bereich des Kontaktelements mit einer kreisförmigen Quererstreckung und einer Längserstreckung, die zumindest im Wesentlichen orthogonal zu einer Längsachse der Kabellitzen orientiert ist, mit den seitlich angrenzenden Kabellitzen stoffschlüssig verbunden. Außerdem setzt das Schweißwerkzeug im Schweißvorgang vorzugsweise auf einer den Kabellitzen abgewandten Fläche des Kontaktelements in einem Bereich des Kontaktelements auf, der ein zusammenhängender Bereich ist.

Unter einem zusammenhängenden Bereich des Kontaktelements wird hierbei und im Folgenden ein Bereich des Kontaktelements verstanden, dessen einzelne Teilbereiche jeweils unmittelbar oder mittelbar über wenigstens einen weiteren Teilbereich des zusammenhängenden Bereichs des Kontaktelements einteilig miteinander verbunden sind. Beispielsweise ist ein Bereich des Kontaktelements, der eine Durchführung aufweist, ein zusammenhängender Bereich des Kontaktelements, da dessen Teilbereiche jeweils unmittelbar oder mittelbar einteilig miteinander verbunden sind. Ein stoffschlüssiges Verbinden eines Kontaktelements mit Kabellitzen in einem Bereich, welche eine Durchführung des Kontaktelement zumindest teilweise umschließt, erfolgt folglich in einem zusammenhängenden Bereich des Kontaktelements. Dagegen ist beispielsweise ein Bereich des Kontaktelements mit zwei Teilbereichen, die innerhalb des Bereiches durch einen Schlitz voneinander getrennt sind und somit nicht einteilig miteinander verbunden sind und einzig über einen weiteren außerhalb des Bereichs befindlichen Teilbereich einteilig miteinander verbunden sind, kein zusammenhängender Bereich des Kontaktelements. Ein stoffschlüssiges Verbinden eines Kontaktelements mit Kabellitzen in einem Bereich, welcher sich über den Schlitz zwischen den beiden Crimpflügel bei einer als B-Crimp oder Rundcrimp realisierten Kontakthülse erstreckt, erfolgt folglich in einem nicht zusammenhängenden Bereich des Kontaktelements. In diesem Zusammenhang sei erwähnt, dass ein stoffschlüssiges, d. h. ein einteiliges, Verbinden von ansonsten nicht einteilig verbundenen Teilbereichen eines Kontaktelements mittels eines Schweißgefüges nicht unter dem Begriff zusammenhängender Bereich eines Kontaktelements fällt. Somit ist einzig ein Bereich des Kontaktelements, der bereits vor dem stoffschlüssigen Verbinden, d. h. in einem noch nicht stoffschlüssig verbundenen Zustand, zusammenhängend war, ein zusammenhängender Bereich im Sinn der genannten Definition.

Das Aufsetzen eines Schweißwerkzeugs auf dem zusammenhängenden Bereich des Kontaktelements ermöglicht vorteilhaft eine sichere Führung des Schweißwerkzeugs in einer zur Längsachse der Kabellitzen senkrechten Richtung während des Schweißvorgangs. Somit ist eine besser gerichtete und geringer beabstandete Temperatur- und Druckeinwirkung im Übergangsbereich zwischen dem Kontaktelement und den angrenzenden Kabellitzen erzielbar, um die die Metalle des Kontaktelements und der Kabellitzen zu einem Schweißgefüge mit einer hohen mechanischen Festigkeit stoffschlüssig zu verbinden. Eine stoffschlüssige Verbindung mit einer hohen mechanischen Festigkeit ist insbesondere für Hochstromanwendungen wichtig.

Unter einem Schweißgefüge wird hierbei und im Folgenden einerseits der bevorzugte Fall einer intermetallischen Phase verstanden, d. h. eines Bereiches, in dem eine intermetallische Verbindung aus zwei verschiedenen Metallen - auch als ein metallisches Mischgefüge bezeichnet - von zu verschweißenden Körpern mit einem im Wesentlichen homogenen Mischungsverhältnis vorliegt. Andererseits wird hierbei und im Folgenden auch der weniger bevorzugte Fall einer metallischen Verbindung zwischen zwei zu verschweißenden Körpern aus einem gleichen Metall verstanden. Das Schweißgefüge, insbesondere die intermetallische Verbindung, ergibt sich aus dem Metall des Kontaktelements und dem Metall der Kabellitzen. Das Schweißgefüge, insbesondere die intermetallische Phase, erstreckt sich vorzugsweise im Grenzbereich zwischen dem Kontaktelement und den angrenzenden Kabellitzen, in dem zumindest temperaturbedingt und optional druckbedingt eine stoffschlüssige Verbindung zwischen dem Kontaktelement und den angrenzenden Kabellitzen verwirklichbar ist. Das Schweißgefüge, insbesondere die intermetallische Phase, liegt folglich in einem Grenzbereich zwischen dem Kontaktelement und den angrenzenden Kabellitzen vor, der sich innerhalb eines gedachten Volumenbereichs mit einer im Wesentlichen zylindrischen Geometrie befindet.

Die Kabellitzen des Kabels sind an einem axialen Ende des Kabels, an dem die Kabellitzen stoffschlüssig mit dem Kontaktelement zu verbinden sind, von einem Kabelmantel bzw. von einem optional ausgebildeten Kabelschirm und von einem optional ausgebildeten Kabelisolator jeweils freigelegt. Die Kabellitzen können im freigelegten Bereich als Einzellitzen oder als Verbund von miteinander kompaktierten, d. h. miteinander verpressten, Litzen ausgebildet sein. Das Kabel der Kabelanordnung ist vorzugsweise als Kabel für Hochspannungs- , Hochstrom- oder Hochleistungsanwendungen im Automobilbereich vorgesehen. Denkbar ist aber auch eine Anwendung der Kabelanordnung in der Daten- oder Hochfrequenzübertragung.

Das Kontaktelement der Kabelanordnung ist vorzugsweise als ein Bestandteil eines Steckverbinders zur steck- und wieder lösbaren elektrischen und mechanischen Verbindung mit einem zugehörigen Gegenkontaktelement eines Gegensteckverbinders ausgebildet. Alternativ kann das Kontaktelement auch als ein Kabelschuh ausgebildet sein, der beispielsweise über eine Schraubverbindung an einem elektrischen Verbindungselement, beispielsweise einer Stromschiene, eines elektrischen Aggregats fixiert ist. Aufgrund der Vielfalt an Anwendungen der Kabelanordnung kann die Geometrie des Kontaktelements und die Verbindungstechnik zu den Kabellitzen sehr unterschiedlich ausgebildet sein.

Das Kontaktelement kann im einfachsten Fall als Flachkontaktelement ausgeführt sein und vorzugsweise einzig über eine stoffschlüssige Verbindung, beispielsweise über eine Schweißverbindung, mit den Kabellitzen elektrisch und mechanisch verbunden sein. Alternativ kann das Kontaktelement auch hülsenförmig ausgebildet sein und über zumindest eine stoffschlüssige Verbindung und optional über eine formschlüssige Verbindung, vorzugsweise über eine Press- oder Crimpverbindung, mit den Kabellitzen elektrisch und mechanisch verbunden sein. Die Crimpverbindung ist hierbei vorzugsweise als eine B-Crimpverbindung, auch als eine F-Crimpverbindung bezeichnet, ausgeführt. Denkbar ist aber auch eine Rund-Crimpverbindung, oder eine Mehrkant-Crimpverbindung, beispielsweise eine Vier- oder Sechskant-Crimpverbindung oder eine Trapez-Crimpverbindung, oder eine dornförmige Crimpverbindung.

Vorteilhafte Ausgestaltungen und Weiterbildungen ergeben sich aus den weiteren Unteransprüchen sowie aus der Beschreibung unter Bezugnahme auf die Figuren der Zeichnung.

Es versteht sich, dass die voranstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

In einer vorzugsweisen Ausprägung der Erfindung kann das stoffschlüssige Verbinden des Kontaktelements mit den angrenzenden Kabellitzen ein punktförmiges Schweißen sein. Unter Schweißen wird hierbei und im Folgenden das unlösbare Verbinden des Kontaktelements und der angrenzenden Kabellitzen unter Anwendung von zumindest Wärme und optional von Druck verstanden. In Abgrenzung zum Schweißen einer Naht wird unter punktförmigen Schweißen hierbei und im Folgenden ein stoffschlüssiges Verbinden zwischen dem Kontaktelement und den angrenzenden Kabellitzen in einem flächenmäßig konzentrierten Bereich, vorzugsweise einem kreisförmigen lokal begrenzten Bereich, verstanden, welcher sich um ein punktförmiges Zentrum erstreckt. Durch die starke Fokussierung des Schweißvorgangs auf ein punktförmiges Zentrum einschließlich einer lokal begrenzten kreisförmigen Umgebung ist kein Bewegen des Schweißwerkzeuges relativ zum Kontaktelement und zu den angrenzenden Kabellitzen wie im Fall des Schweißens einer Naht erforderlich. Dies vereinfacht den fertigungstechnischen Aufwand deutlich.

In einer besonders vorzugsweisen Ausprägung der Erfindung kann das stoffschlüssige Verbinden des Kontaktelements mit den angrenzenden Kabellitzen ein punktförmiges Rührreibschweißen sein. Unter punktförmigen Rührreibschweißen wird hierbei und im Folgenden ein punktförmiges Schweißverfahren verstanden, bei dem von einem verschleißfesten rotierenden und sich axial bewegenden Rührreibschweißwerkzeug, welches auf das Kontaktelement einwirkt, im Grenzbereich zwischen dem Kontaktelement und den angrenzenden Kabellitzen ein Verkneten bzw. ein Verwirbeln der Metalle des Kontaktelements und der angrenzenden Kabellitzen sowie ein Erwärmen der beiden Metalle durch die erzeugte Reibenergie erfolgt. Beide Effekte führen zu einer Plastifikation der beiden Metalle, d. h. zu einem Übergang der beiden Metalle in einen verformbaren und fließfähigen Zustand, durch welchen erst ein Schweißgefüge, vorzugsweise eine intermetallische Verbindung, mit einer hohen mechanischen Festigkeit im Grenzbereich zwischen dem Kontaktelement und den angrenzenden Kabellitzen erzielbar ist. Während beim reinen thermischen Schweißen die Metalle der zu verschweißenden Körper jeweils in einen flüssigen Zustand überführt werden, welche sich zu einer Schmelze verbinden, werden die Metalle der zu verschweißenden Körper beim Rührreibschweißen jeweils in einen teigigen Zustand überführt, welche sich jeweils mittels Verknetens, d. h. in einem atomaren Diffusionsprozess, zu einem Schweißgefüge verbinden.

Im Gegensatz zu anderen punktförmigen Schweißverfahren wie beispielsweise punktförmiges Laserschweißen erzielt das punktförmige Rührreibschweißen eine für den Stoffschluss ausreichende Erwärmung, aber keine zu hohe Erwärmung, welche zu einer unerwünschten Beschädigung des Kabelmantels aus Kunststoff führen kann. Eine aufwendige und zeitintensive Abkühlung ist somit nicht erforderlich. Gegenüber dem beispielhaft genannten punktförmigen Laserschweißen ist mit dem Rührreibschweißen aufgrund des größeren Querschnittsprofils des Rührreibschweißwerkzeuges auch ein Schweißen in einem großflächigeren Bereich, insbesondere mit einer größeren Quererstreckung, möglich, was die mechanische Festigkeit der Schweißverbindung zusätzlich erhöht. Schließlich ermöglicht das Rührreibschweißen in dem von außen nicht zugänglichen Grenzbereich zwischen den Kontaktelement und den angrenzenden Kabellitzen, eine Reibenergie und somit ein Schweißgefüge, vorzugsweise eine intermetallische Phase, zu erzeugen, was mit dem beispielhaft erwähnten punktförmigen Laserschweißen nicht möglich ist.

In einer weiteren vorzugsweisen Ausprägung der Erfindung kann im Bereich des Kontaktelements, in dem die stoffschlüssige Verbindung mit den angrenzenden Kabellitzen ausgebildet ist, ein Loch, vorzugsweise ein Durchgangsloch, von der den Kabellitzen abgewandten Fläche zu der den Kabellitzen zugewandten Fläche des Kontaktelements, ausgebildet sein.

Ein derartiges Loch, insbesondere ein derartiges Durchgangsloch, verkleinert das vom Rührreibschweißwerkzeug erfasste Metallvolumen des Kontaktelements und verbessert somit das Verschieben, das Verkneten bzw. Verwirbeln des vom Rührreibschweißwerkzeug erfassten Metalls des Kontaktelements mit dem Metall der Kabellitzen. Das verbesserte Verkneten bzw. Verwirbeln des Metalls des Kontaktelements kann vorteilhaft auch zu einer Verteilung des verkneteten bzw. verwirbelten Metalls des Kontaktelements in einen vergrößerten Bereich des Metalls der Kabellitzen und somit zu einem vergrößerten Grenzbereich der intermetallischen Phase führen.

Das originäre Loch im Kontaktelement, insbesondere das originäre Durchgangsloch im Kontaktelement, kann vorzugsweise zumindest teilweise mit einem Schweißgefüge, vorzugsweise mit einer intermetallischen Phase, aus dem Metall des Kontaktelements und dem Metall der Kabellitzen aufgefüllt sein. Die geometrische Ausformung und der axiale Druck des Rührreibschweißwerkzeuges führt dazu, dass das Metall der Kabellitzen in das Loch gedrückt wird und sich mit dem Metall des an das Loch angrenzenden Bereichs des Kontaktelements zumindest im radial äußeren Teilbereich des Lochs mittels Verknetens bzw. Verwirbelns zu einem Schweißgefüge, vorzugsweise einer intermetallischen Phase, stoffschlüssig verbindet. Die Ausbildung eines Schweißgefüges, vorzugsweise einer intermetallischen Phase, nicht nur im Grenzbereich zwischen dem Kontaktelement und den angrenzenden Kabellitzen, sondern auch im Loch des Kontaktelements erhöht vorteilhaft die mechanische Festigkeit der Schweißverbindung.

Bevorzugt kann eine Quererstreckung des originären Loches bzw. des originären Durchgangsloches kleiner als die kreisförmige Quererstreckung des Bereiches ausgebildet sein, in dem eine stoffschlüssige Verbindung zwischen dem Kontaktelement und den angrenzenden Kabellitzen vorliegt. Die Quererstreckung dieses Bereiches entspricht im Wesentlichen der Quererstreckung des Rührreibschweißwerkzeuges. Der Erfinder der Anmelderin hat herausgefunden, dass vorzugsweise bei einem Verkleinerungsfaktor zwischen 0,7 und 0,9, insbesondere vorzugsweise bei einem Verkleinerungsfaktor zwischen 0,8 und 0,9, des Lochquerschnitts zum Querschnitt des Bereichs der stoffschlüssigen Verbindung das Verkneten, Verwirbeln und Vermischen der beiden Metalle im Loch des Kontaktelements am besten ausgebildet ist.

In einer weiteren vorzugsweisen Ausprägung einer Kabelanordnung kann sich das Durchgangsloch zu einer Vertiefung verlängern, welche von Kabellitzen umgeben ist. Die Vertiefung kann hierbei vorzugsweise mittelbar von den Kabellitzen umgeben sein, d. h. zwischen den Kabellitzen und der Vertiefung kann das Schweißgefüge, vorzugsweise die intermetallische Phase, angeordnet sein.

Die rotationssymmetrische Vertiefung ist durch das Einwirken eines rotationssymmetrischen Schweißwerkzeuges, vorzugsweise eines rotationssymmetrischen Rührreibschweißwerkzeuges, verursacht. Am stirnseitigen Ende des rotationssymmetrischen Schweißwerkzeuges bzw. Rührreibschweißwerkzeuges kann eine rotationssymmetrische Ausnehmung derart ausgebildet sein, dass sich radial außenseitig ein kreisförmiger Grat oder ein rohrförmiger Vorsprung bilden kann. Mit einer derartigen Ausformung des rotationssymmetrischen Schweißwerkzeuges bzw. Rührreibschweißwerkzeuges kann vorzugsweise eine rotationssymmetrische Vertiefung ausgebildet sein, welche in einem äußeren Durchmesserbereich eine größere Tiefe als in einem benachbarten inneren Durchmesserbereich aufweisen kann. Durch eine derartige Ausformung des rotationssymmetrischen Schweißwerkzeuges bzw. Rührreibschweißwerkzeuges kann vorteilhaft das stoffschlüssige Verbinden aller Metallpartikel - auch der Verunreinigungen - auf einen begrenzten Bereich konzentriert werden.

Als besonders vorteilhaft hat sich die Verwendung von Aluminium oder einer Aluminiumlegierung als Metall für die Kabellitzen herausgestellt. Aluminium oder eine Aluminiumlegierung weist ein geringeres Gewicht als ein Buntmetall, vorzugsweise Kupfer, auf, was aus energetischen Gründen im Automobilbau immer wichtiger wird. Auch ist der Preis pro Gewichtseinheit bei Aluminium oder bei einer Aluminiumlegierung geringer als bei einem Buntmetall, vorzugsweise als bei Kupfer. Als Legierungspartner für eine Aluminiumlegierung können vorzugsweise Mangan, Magnesium, Kupfer oder Zink zum Einsatz kommen.

Als vorzugsweises Metall für das Kontaktelement kann ein Buntmetall oder eine Buntmetalllegierung zum Einsatz kommen, um eine intermetallische Phase zu verwirklichen. Insbesondere bevorzugt kann Kupfer oder eine Kupferlegierung als Metall für das Kontaktelement zum Einsatz kommen. Die elektrische Leitfähigkeit von Kupfer oder einer Kupferlegierung ist gegenüber anderen Metallen verbessert. Es hat sich herausgestellt, dass die mechanische Verarbeitbarkeit, insbesondere die Schweißbarkeit mittels Rührreibschweißens, von Kupfer oder einer Kupferlegierung für eine intermetallische Verbindung mit Aluminium bzw. einer Aluminiumlegierung besonders gut geeignet ist und eine mechanisch stabile Verbindung bildet. Daneben kann als Metall für das Kontaktelement auch Aluminium oder eine Aluminiumlegierung zum Einsatz kommen.

In einer bevorzugten Ausprägung einer Kabelanordnung sind die Kabellitzen des Kabels nicht nur stoffschlüssig, sondern auch formschlüssig mit dem Kontaktelement verbunden. Dies ist insbesondere bei einer Kabelanordnung der Fall, bei der das Kontaktelement sämtliche freigelegten Kabellitzen des Kabels zumindest annährend vollständig umschließt und das Kontaktelement somit zumindest annährend hülsenförmig ausgebildet ist. Der Formschluss kann bevorzugt über ein Verpressen, insbesondere bevorzugt über ein Vercrimpen, erfolgen. Als bevorzugte Crimpverbindung hat sich hierbei eine so genannte offene Crimpverbindung wie beispielsweise eine B-Crimpverbindung herausgestellt, bei der der Mantel des Kontaktelements über die gesamte Längserstreckung einen Längsspalt aufweist, der entweder geschlossen ist (Seitenkanten des Kontaktelements berühren sich im Längsspalt) oder geringfügig geöffnet ist (Seitenkanten des Kontaktelements sind geringfügig beabstandet). Der Bereich des Kontaktelements, welcher den Längsspalt enthält, ist also kein zusammenhängender Bereich.

Der Längsspalt des Kontaktelements kann vorzugsweise gegenüber dem zusammenhängenden Bereich des Kontaktelements ausgebildet sein, in dem das Kontaktelement stoffschlüssig mit den angrenzenden Kabellitzen verbunden ist. Da das Rührreibschweißwerkzeug vorzugsweise durch eine Durchführung in der ortsfesten Crimpbacke hindurchgeführt wird, welche bei einer vorzugsweisen B-Crimpverbindung an dem dem Längsspalt gegenüberliegenden zusammenhängenden Bereich des Kontaktelements anliegt, vereinfacht bzw. ermöglicht eine derartige Lokalisierung der Schweißung am Kontaktelement erst ein zeitgleiches Schweißen und Crimpen der Kabellitzen mit dem Kontaktelement.

Schließlich kann auch vorgesehen sein, dass am Kontaktelement außenseitig, d. h. an der äußeren Mantelfläche des zumindest annährend hülsenförmig ausgebildeten Kontaktelements, im zusammenhängenden Bereich des Kontaktelements, in dem das Kontaktelement mit den angrenzenden Kabellitzen stoffschlüssig verbunden ist, ein rotationssymmetrischer Abdruck, vorzugsweise ein kreisscheibenförmiger oder ein ringförmiger Abdruck, eines Schweißwerkzeuges ausgebildet sein. Bei dem kreisscheibenförmigen Abdruck kann es sich um eine Senke mit einer geringen Tiefe handeln, die durch das Abstützen eines Schweißwerkzeuges, vorzugsweise eines Rührreibschweißwerkzeuges, mit einer planaren Stirnfläche am Kontaktelement verursacht ist.

Die Tiefe eines ringförmigen Abdrucks kann sich vorzugsweise in Richtung des äußeren Durchmessers des ringförmigen Abdrucks vergrößern. Eine derart geformte Vertiefung an der Außenfläche des Kontaktelements ergibt sich aus der Anwendung eines rotationssymmetrischen Schweißwerkzeuges, vorzugsweise eines Rührreibschweißwerkzeuges, an dessen stirnseitigem Ende eine rotationssymmetrische Ausnehmung derart ausgebildet ist, dass sich radial außenseitig ein kreisförmiger Grat oder ein rohrförmiger Vorsprung bildet. Ein derart geformtes rotationssymmetrisches Schweißwerkzeug, vorzugsweise ein derart geformtes Rührreibschweißwerkzeug, taucht während der axialen Bewegung des Schweißprozesses ausgehend von der Außenmantelfläche in das Kontaktelement ein und erzeugt hierbei eine derartige Umformung im Kontaktelement. Die Ausformung des Schweißwerkzeuges bzw. des Rührreibschweißwerkzeuges am stirnseitigen Ende bewirkt, dass metallische Verunreinigungen, beispielsweise metallisches Beschichtungsmaterial an der Außenfläche des Kontaktelements oder metallische Verschmutzungen an der Stirnseite des rotationssymmetrischen Werkzeuges, die üblicherweise im Schweißprozess radial nach außen verstreut werden und dort zu unerwünschter Schmutzablagerung führen, im Schweißbereich verbleiben.

Die ringförmige Vertiefung an der Außenfläche des Kontaktelements und die zugehörige stirnseitige Oberfläche des Rührreibschweißwerkzeuges kann vorzugsweise eine konische Durchmesserverjüngung oder alternativ auch eine konkav bzw. konvex gewölbte oder eine gestufte Durchmesserverjüngung der Innenfläche aufweisen.

Die Erfindung betrifft auch ein Verfahren zur Herstellung einer Kabelanordnung aus einem Kabel und einem Kontaktelement, das folgende Verfahrensschritte aufweist:
- Bereitstellen des Kabels und des Kontaktelements,
- Positionieren des Kontaktelements derart zum Kabel, dass ein zusammenhängender Bereich des Kontaktelements relativ zu einer Längsachsrichtung der Kabellitzen seitlich zu den Kabellitzen angeordnet ist,
   und
- stoffschlüssiges Verbinden des zusammenhängenden Bereichs des Kontaktelements mit den angrenzenden Kabellitzen, wobei der zusammenhängende Bereich eine kreisförmige Quererstreckung und eine Längserstreckung aufweist, die zumindest im Wesentlichen orthogonal zur Längsachse der Kabellitzen orientiert ist.

Das Verfahren zur Herstellung einer Kabelanordnung erzielt eine verbessert gerichtete Temperatur- und Druckeinwirkung im Übergangsbereich zwischen dem Kontaktelement und den angrenzenden Kabellitzen gegenüber bisher gängigen Verbindungsverfahren von Kabelanordnungen mit unterschiedlichen oder gleichen Metallen des Kontaktelements und der Kabellitzen. Somit ist hiermit ein Schweißgefüge, vorzugsweise eine intermetallische Phase, zwischen dem Kontaktelement und den Kabellitzen mit einer verbesserten mechanischen Festigkeit erzielbar, was insbesondere für Hochstromanwendungen vorteilhaft ist.

Die bisher und im Folgenden zur Kabelanordnung erwähnten technische Merkmale, technischen Wirkungen und technischen Vorteile gelten äquivalent beim Verfahren zur Herstellung einer Kabelanordnung.

Eine vorzugsweise Ausprägung des Verfahrens zur Herstellung einer Kabelanordnung bezieht sich auf ein Kontaktelement, das sämtliche freigelegten Kabellitzen zumindest annährend vollständig umschließt und somit zumindest annährend hülsenförmig ausgebildet ist. Bei einem derartig ausgebildeten Kontaktelement sind das Kontaktelement und die angrenzenden Kabellitzen über eine stoffschlüssige Verbindung und eine formschlüssige Verbindung, d.h. eine formschlüssige Pressverbindung, vorzugsweise eine Crimpverbindung, miteinander verbunden. In diesem Fall kann das Verpressen, vorzugsweise das Crimpen, der Kabellitzen mit dem Kontaktelement bevorzugt vor dem stoffschlüssigen Verbinden oder zumindest teilweise während des stoffschlüssigen Verbindens stattfinden. Insbesondere das zumindest teilweise zeitgleiche stoff- und formschlüssige Verbinden des Kontaktelements mit den Kabellitzen beschleunigt vorteilhaft den Fertigungsprozess.

Im Hinblick auf eine Kombination eines stoffschlüssigen Verbindens und eines formschlüssigen Verbindens in der Kabelanordnung kann im Crimpwerkzeug vorzugsweise eine Durchführung zum Hindurchführen eines Rührreibschweißwerkzeuges ausgebildet sein.

Die Erfindung betrifft schließlich auch eine Kabelkonfektionierungsvorrichtung zur Herstellung einer Kabelanordnung aus einem Kontaktelement und einem Kabel. In der Kabelkabelkonfektionierungsvorrichtung ist eine Einrichtung zum punktförmigen Schweißen, vorzugsweise eine punktförmige Rührreibschweißeinrichtung, vorgesehen und ausgebildet, um einen zusammenhängenden Bereich des Kontaktelements mit relativ zu einer Längsachsrichtung von Kabellitzen des Kabels seitlich angrenzenden Kabellitzen in einer zumindest im Wesentlichen orthogonalen Richtung zur Längsachse der Kabellitzen stoffschlüssig zu verbinden.

Mit der Kabelkabelkonfektionierungsvorrichtung zur Herstellung der Kabelanordnung kann eine verbessert gerichtete Temperatur- und Druckeinwirkung im Übergangsbereich zwischen dem Kontaktelement und den angrenzenden Kabellitzen gegenüber bisher gängigen Kabelkabelkonfektionierungsvorrichtungen zur Herstellung einer Kabelanordnung mit gleichen oder unterschiedlichen Metallen des Kontaktelements und der Kabellitzen erzielt werden.

Die bisher und im Folgenden zur Kabelanordnung und zum Verfahren zur Herstellung einer Kabelanordnung aus einem Kabel und einem Kontaktelement erwähnten technische Merkmale, technischen Wirkungen und technischen Vorteile gelten äquivalent bei der Kabelkonfektionierungsvorrichtung zur Herstellung einer Kabelanordnung.

Für ein bevorzugtes Kontaktelement, das sämtliche freigelegten Kabellitzen zumindest annährend vollständig umschließt und somit zumindest annährend hülsenförmig ausgebildet ist kann in der Kabelkabelkonfektionierungsvorrichtung vorzugsweise zusätzlich eine Presseinrichtung, vorzugsweise eine Crimpeinrichtung, vorgesehen und ausgebildet sein, um die Kabellitzen im Kontaktelement zu verpressen bzw. zu crimpen. Die Crimpeinrichtung ist insbesondere ausgebildet, eine B-Crimpverbindung zwischen dem Kontaktelement und den Kabellitzen herzustellen.

In einer weiteren vorzugsweisen Ausprägung der Kabelkabelkonfektionierungsvorrichtung kann die Einrichtung zum punktförmigen Schweißen, vorzugsweise die punktförmige Rührreibschweißeinrichtung, ein rotationssymmetrisches Schweißwerkzeug aufweisen, an dessen stirnseitigem Ende eine rotationssymmetrische Ausnehmung derart ausgebildet ist, dass sich radial außenseitig ein kreisförmiger Grat oder ein rohrförmiger Vorsprung bildet. Das Schweißwerkzeug kann folglich am axialen Ende, das mit dem Kontaktelement in Wechselwirkung tritt, eine rotationsymmetrische Ausnehmung mit einer Innenfläche aufweisen, deren Durchmesser sich in einer zur Schweißrichtung entgegengesetzten Richtung verjüngt. Die Durchmesserverjüngung kann vorzugsweise konisch, d. h. "tellerförmig", alternativ aber auch gestuft oder konvex bzw. konkav gebogen ausgeformt sein. Die Verjüngung des Durchmessers der Innenfläche kann sich bis zur Längsachse bzw. Mittelachse des rotationssymmetrisch ausgeführten Schweißwerkzeuges erstrecken und somit ein stirnseitiges Ende des Schweißwerkzeuges mit einer spitzförmigen Ausnehmung ausbilden. Alternativ kann die ausgehend vom äußeren seitlichen Rand des Schweißwerkzeugs ausgebildete Verjüngung des Durchmessers der Innenfläche der Ausnehmung im Bereich der Längsachse bzw. der Mittelachse des Schweißwerkzeuges in einen stiftförmigen oder spitzförmigen Vorsprung übergehen. Am axialen Ende des Schweißwerkzeuges kann anstelle einer konischen, konvex bzw. konkav geformten oder gestuften Verjüngung des Durchmessers der Innenfläche der Ausnehmung auch eine rohrförmige Ausbildung ausgebildet sein. Eine derartige rohrförmige Ausbildung kann in einem bestimmten axialen Abstand vom axialen Ende des Werkzeugs entfernt in eine konische Verjüngung des Durchmessers einer Innenfläche einer Ausnehmung des Schweißwerkzeuges übergehen.

Jede dieser geometrischen Ausprägungen des auf das Kontaktelement einwirkenden stirnseitigen Endes des rotationssymmetrischen Schweißwerkzeuges bewirkt wie bereits erwähnt ein Einfangen metallische Verunreinigungen im Schweißbereich. Außerdem bewirkt jede derartige geometrische Ausprägung des rotationssymmetrischen Schweißwerkzeuges nicht nur einen axial gerichteten Druck vom Schweißwerkzeug auf das Kontaktelement, sondern zusätzlich auch in Richtung des Zentrums des zusammenhängenden Bereichs, in dem das Kontaktelement stoffschlüssig mit den angrenzenden Kabellitzen zu verbinden ist. Insgesamt werden dadurch die Metallpartikel des Kontaktelements im Prozess des Verknetens mit den Metallpartikeln der Kabellitzen stärker in einem begrenzten Bereich zwischen dem Kontaktelement und den Kabellitzen konzentriert und somit eine stoffschlüssige Verbindung mit einer höheren mechanischen Festigkeit erzeugt. Die vorgestellten geometrischen Ausprägungen des stirnseitigen Endes des Schweißwerkzeuges sind nur beispielhaft und nicht abschließend zu verstehen.

Die obigen Ausgestaltungen und Weiterbildungen lassen sich, sofern sinnvoll, beliebig miteinander kombinieren. Weitere mögliche Ausgestaltungen, Weiterbildungen und Implementierungen der Erfindung umfassen auch nicht explizit genannte Kombinationen von zuvor oder im Folgenden bezüglich der Ausführungsbeispiele beschriebenen Merkmale der Erfindung. Insbesondere wird dabei der Fachmann auch Einzelaspekte als Verbesserungen oder Ergänzungen zu der jeweiligen Grundform der vorliegenden Erfindung hinzufügen.

### INHALTSANGABE DER ZEICHNUNG

Die vorliegende Erfindung wird nachfolgend anhand der in den schematischen Figuren der Zeichnung angegebenen Ausführungsbeispiele näher erläutert. Es zeigen dabei:
- Fig. 1A, 1B: eine isometrische Darstellung eines gestanzten und vorgebogenen Kontaktelements und von im gestanzten und vorgebogenen Kontaktelement eingelegten Kabellitzen einer ersten Ausführungsform einer erfindungsgemäßen Kabelanordnung,
- Fig. 1C, 1D: eine isometrische Darstellung und eine Querschnittsdarstellung einer gecrimpten ersten Ausführungsform einer erfindungsgemäßen Kabelanordnung,
- Fig. 1E, 1F: eine isometrische Darstellung und eine Querschnittsdarstellung einer gecrimpten und geschweißten ersten Ausführungsform einer erfindungsgemäßen Kabelanordnung,
- Fig. 2A, 2B: eine isometrische Darstellung eines gestanzten und vorgebogenen Kontaktelements und von im gestanzten und vorgebogenen Kontaktelement eingelegten Kabellitzen einer zweiten Ausführungsform einer erfindungsgemäßen Kabelanordnung,
- Fig. 2C, 2D: eine isometrische Darstellung und eine Querschnittsdarstellung einer gecrimpten zweiten Ausführungsform einer erfindungsgemäßen Kabelanordnung,
- Fig. 2E, 2F: eine isometrische Darstellung und eine Querschnittsdarstellung einer gecrimpten und geschweißten zweiten Ausführungsform einer erfindungsgemäßen Kabelanordnung,
- Fig 3A, 3B: eine Querschnittsdarstellung einer vorbereiteten und einer final geschweißten dritten Ausführungsform einer erfindungsgemäßen Kabelanordnung,
- Fig 4A, 4B: eine Querschnittsdarstellung einer vorbereiteten und einer final geschweißten vierten Ausführungsform einer erfindungsgemäßen Kabelanordnung,
- Fig. 5A, 5B: eine Querschnittsdarstellung einer mit einer ersten Variante eines Schweißwerkzeuges bearbeiteten Kabelanordnung und zugehörige erste Variante eines Schweißwerkzeuges,
- Fig. 6A, 6B: eine Querschnittsdarstellung einer mit einer zweiten Variante eines Schweißwerkzeuges bearbeiteten Kabelanordnung und zugehörige zweite Variante eines Schweißwerkzeuges,
- Fig. 7A, 7B: eine Querschnittsdarstellung einer mit einer dritten Variante eines Schweißwerkzeuges bearbeiteten Kabelanordnung und zugehörige dritte Variante eines Schweißwerkzeuges und
- Fig. 8: eine isometrische Darstellung einer erfindungsgemäßen Kabelkonfektionierungsvorrichtung.

Die beiliegenden Figuren der Zeichnung sollen ein weiteres Verständnis der Ausführungsformen der Erfindung vermitteln. Sie veranschaulichen Ausführungsformen und dienen im Zusammenhang mit der Beschreibung der Erklärung von Prinzipien und Konzepten der Erfindung. Andere Ausführungsformen und viele der genannten Vorteile ergeben sich im Hinblick auf die Zeichnungen. Die Elemente der Zeichnungen sind nicht notwendigerweise maßstabsgetreu zueinander gezeigt.

In den Figuren der Zeichnung sind gleiche, funktionsgleiche und gleich wirkende Elemente, Merkmale und Komponenten - sofern nichts anderes ausgeführt ist - jeweils mit denselben Bezugszeichen versehen.

Im Folgenden werden die Figuren zusammenhängend und übergreifend beschrieben.

### BESCHREIBUNG VON AUSFÜHRUNGSBEISPIELEN

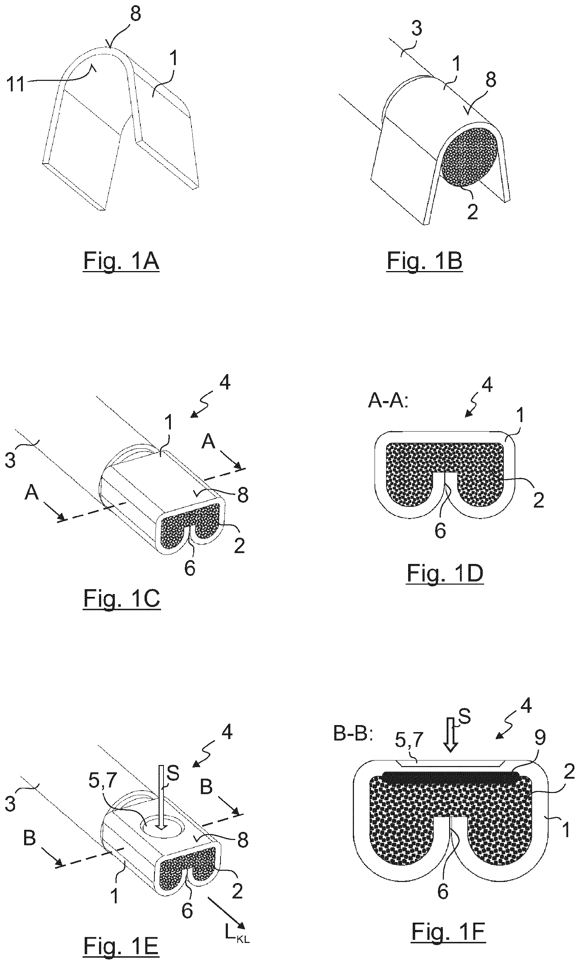

Aus den Figuren 1A bis 1F geht eine erste Ausführungsform der erfindungsgemäßen Kabelanordnung in den einzelnen Fertigungsschritten hervor:
Fig. 1A zeigt ein Kontaktelement 1 aus einem Verbundmetall, vorzugsweise aus Kupfer oder einer Kupferlegierung, welche für die formschlüssige Verbindung mit den Kabellitzen 2 eines Kabels 3 ausgestanzt und beispielsweise U-förmig vorgebogen ist. In Fig. 1B sind die vom Kabelmantel freigelegten Kabellitzen 2 eines Kabels 3 aus Aluminium oder einer Aluminiumlegierung in dem U-förmig vorgebogenen Kontaktelement 1 eingelegt. Aus der isometrischen Darstellung der Fig. 1C und der Querschnittsdarstellung der Fig. 1D geht eine Kabelanordnung 4 aus einem Kabel 3 und einem Kontaktelement 1 hervor, das mit den vom Kabelmantel freigelegten Kabellitzen 2 über eine B-Crimpverbindung verpresst bzw. vercrimpt ist.

Die isometrische Darstellung der Fig. 1E und die Querschnittsdarstellung der Fig. 1F zeigen eine Kabelanordnung 4, bei der das Kontaktelement 1 zusätzlich zur Crimpverbindung auch noch über eine Schweißverbindung, vorzugsweise über eine Rührreibschweißverbindung, miteinander stoffschlüssig verbunden sind. Wie in Fig. 1E durch einen Pfeil angedeutet erfolgt die Schweißung, vorzugsweise die Rührreibschweißung, durch ein entsprechend ausgebildetes Schweißwerkzeug in einer zur Längsachse L_{KL} der Kabellitzen 2 orthogonalen Schweißrichtung S. Die Schweißung des Kontaktelements 1 mit den angrenzenden Kabellitzen 2 erfolgt somit mittels eines Schweißwerkzeugs seitlich in einem zusammenhängenden Bereich 5 des Kontaktelements 1, der dem durch einen geschlossenen Spalt 6 gebildeten offenen Bereich der B-Crimpverbindung gegenüberliegend ausgebildet ist. Dieser zusammenhängende Bereich 5 befindet sich also im flach ausgebildeten Abschnitt des gecrimpten Kontaktelements 1 und entspricht im Wesentlichen dem in Fig. 1E dargestellten kreisförmigen Abdruck 7, welcher durch das Schweißwerkzeug mit einer beispielsweise planaren Stirnfläche, vorzugsweise durch das Rührreibschweißwerkzeug mit einer beispielsweise planaren Stirnfläche, im Schweißvorgang an der Außenfläche 8 des Kontaktelements 1 eingeprägt wird.

In einem seitlichen Grenzbereich zwischen dem zusammenhängenden Bereich 5 des Kontaktelements 1 und den angrenzenden Kabellitzen 2 wird durch den Schweißvorgang der zusammenhängende Bereich 5 des Kontaktelements 1 mit den angrenzenden Kabellitzen 2 zu einer intermetallischen Phase 9 stoffschlüssig verbunden. Die stoffschlüssige Verbindung ergibt sich durch das Aluminium oder die Aluminiumlegierung der Kabellitzen 2 mit dem Kupfer oder der Kupferlegierung des Kontaktelements 1. Der zusammenhängende Bereich 5 des Kontaktelements, der mit den angrenzenden Kabellitzen 2 in einer intermetallischen Phase 9 stoffschlüssig verbunden ist, weist eine Längserstreckung in der Schweißrichtung S und aufgrund eines rotationssymmetrischen Querschnittsprofils des Schweißwerkzeugs eine kreisförmige Quererstreckung auf. Die intermetallische Phase 9, in der sich die Aluminium- oder die Aluminiumlegierungs-Partikel der Kabellitzen 2 mit den Kupfer- oder den Kupferlegierungs-Partikeln des Kontaktelements 1 hoch konzentriert zusammenfinden und eine intermetallische Verbindung ausbilden, weist eine im Wesentlichen plättchenförmige Geometrie mit einer geringen Längserstreckung und einer kreisförmigen Quererstreckung auf und besitzt eine insbesondere für Hochstrom-Anwendungen erforderliche hohe mechanische Festigkeit.

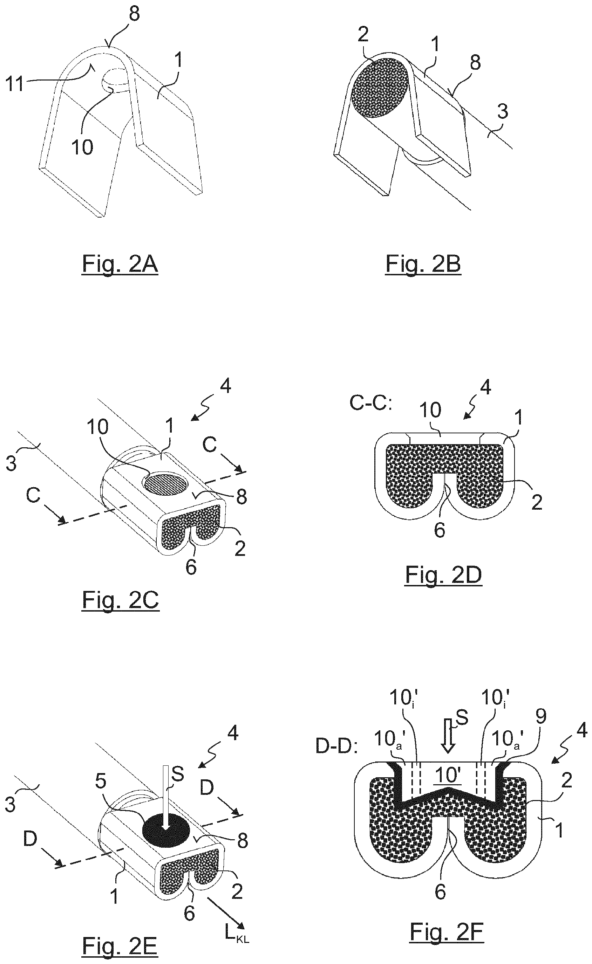

Aus den Figuren 2A bis 2F geht eine zweite Ausführungsform der erfindungsgemäßen Kabelanordnung 4 in den einzelnen Fertigungsschritten hervor, welche eine bevorzugte Ausführungsform der erfindungsgemäßen Kabelanordnung 4 darstellt:
In der zweiten Ausführungsform ist innerhalb des zusammenhängenden Bereiches 5 des Kontaktelements 1, der eine stoffschlüssige Verbindung mit den angrenzenden Kabellitzen 2 ausbildet, ein Durchgangsloch 10 von der Außenfläche 8 bis zur Innenfläche 11 des Kontaktelements 1 vorzugsweise mittels Stanzens ausgebildet. Der Durchmesser des Durchgangslochs 10 ist kleiner, vorzugsweise geringfügig kleiner als der Durchmesser des rotationssymmetrischen Schweißwerkzeugs und somit kleiner als der Durchmesser des kreisförmigen zusammenhängenden Bereiches 5 des Kontaktelements 1, der mit den angrenzenden Kabellitzen 2 stoffschlüssig verbunden ist. Das Durchgangsloch 10 ist wie in der ersten Ausführungsform der Kabelanordnung 4 innerhalb des zusammenhängenden Bereiches 5 des Kontaktelements 1, also gegenüberliegend dem geschlossenen Spalt 6 der B-Crimpverbindung des Kontaktelements 1 mit den Kabellitzen 2, ausgebildet.

Das Schweißwerkzeug, das bei der Herstellung der zweiten Ausführungsform der erfindungsgemäßen Kabelanordnung 4 beispielhaft verwendet wurde, weist eine Stirnfläche mit einer konisch geformten Ausnehmung auf. Somit weist das Schweißwerkzeug am axialen Ende eine Innenfläche auf, dessen Durchmesser sich entgegen der Schweißrichtung S konisch verjüngt. In der intermetallischen Phase 9 bildet sich eine intermetallische Verbindung aus den Aluminium- oder den Aluminiumlegierungspartikeln der Kabellitzen 9 und den Kupfer- oder den Kupferlegierungspartikeln des Kontaktelements 1. Die intermetallische Phase 9 weist eine Geometrie mit einer Längserstreckung in der Schweißrichtung S und einer rotationssymmetrischen Quererstreckung auf. Die intermetallische Phase 9 befindet sich innerhalb eines gedachten zylindrischen Volumenbereichs, welcher durch eine Längsachse und den Durchmesser des Schweißwerkzeugs bestimmt ist.

Durch den Rührreibschweißvorgang bildet sich in der Kabelanordnung 4 umformtechnisch eine Vertiefung 10' bis zur intermetallischen Phase 9 aus. Die Vertiefung 10' weist aufgrund der Ausformung am axialen Ende des Rührreibschweißwerkzeuges in einem äußeren Durchmesserbereich (10ₐ') eine größere Tiefe als in einem benachbarten inneren Durchmesserbereich (10ᵢ') auf.

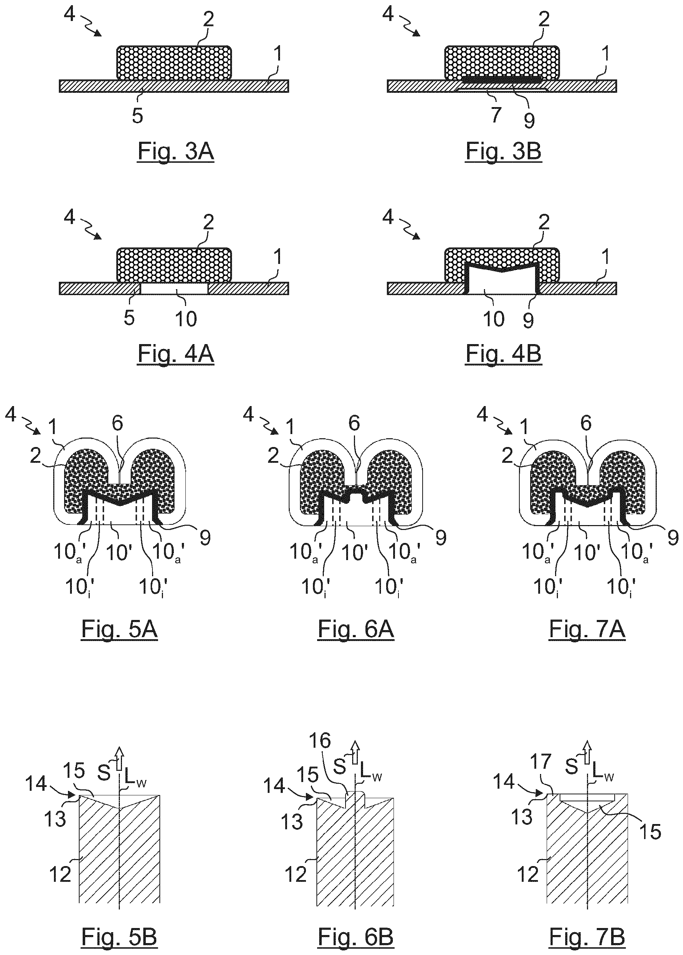

In den Figuren 3A und 3B ist eine dritte Ausführungsform der erfindungsgemäßen Kabelanordnung 4 in verkürzter Darstellung der Herstellung dargestellt, in der das Kontaktelement 1 als ein Flachkontaktelement, beispielsweise als ein Kabelschuh, ausgebildet ist. Die Fig. 3A zeigt hierbei die Bereitstellung des flachen Kontaktelements 1 seitlich zu den freigelegten Kabellitzen 2 des Kabels 3 in einer zur Längsachse L_{KL} der Kabellitzen 2 orthogonalen Richtung. Das flache Kontaktelement 1 weist im zusammenhängenden Bereich 5, in dem es gemäß Fig. 3B mit den angrenzenden Kabellitzen 2 stoffschlüssig verbunden ist, kein Durchgangsloch 10 auf. Auch erfolgt die stoffschlüssige Verbindung mittels eines Schweißwerkzeugs, vorzugsweise mittels eines Rührreibschweißwerkzeuges, welches eine planare Stirnfläche aufweist. Die intermetallische Phase 9 im Grenzbereich zwischen dem Kontaktelement 1 und den angrenzenden Kabellitzen 2 weist folglich gemäß Fig. 3B eine plättchenförmige Geometrie mit einer kreisförmigen Quererstreckung auf. An der der intermetallischen Phase 9 abgewandten Fläche des Kontaktelements 1 ist ein kreisförmiger Abdruck 7 am Kontaktelement 1 erkennbar, welcher durch das Eindringen des Schweißwerkzeuges verursacht ist.

Aus den Figuren 4A und 4B geht eine vierte Ausführungsform der erfindungsgemäßen Kabelanordnung 4 in verkürzter Darstellung der Herstellung hervor, in der das flache Kontaktelement 1 mit einem Durchgangsloch 10 im zusammenhängenden Bereich 5 des Kontaktelements 1 ausgebildet ist, der mit den angrenzenden Kabellitzen 2 stoffschlüssig verbunden ist. Das hierbei verwendete Schweißwerkzeug, insbesondere Rührreibschweißwerkzeug, weist eine Stirnfläche mit einer konisch ausgebildeten Ausnehmung auf.

In den Querschnittsdarstellungen der Figuren 5A, 6A und 7A sind jeweils unterschiedliche Geometrie-Ausprägungen einer intermetallischen Phase 9 im Stoffschluss zwischen dem Kontaktelement 1 und den angrenzenden Kabellitzen 2 dargestellt, welche sich bei Anwendung eines Schweißwerkzeuges mit einer zugehörigen Geometrie gemäß der Figuren 5B, 6B und 7B ergeben. Das Kontaktelement 1 und die Kabellitzen 2 der Kabelanordnung 4 sind hierbei ergänzend zum Stoffschluss über einen als eine B-Crimpverbindung ausgebildeten Formschluss miteinander verbunden:
Die in Fig. 5A abgebildete Geometrie einer intermetallischen Phase 9 als intermetallische Verbindung zwischen dem Aluminium bzw. der Aluminiumlegierung der Kabellitzen 2 und dem Kupfer bzw. der Kupferlegierung des Kontaktelements 1 entspricht der Geometrie einer intermetallischen Phase 9 der bereits beschriebenen zweiten Ausführungsform einer Kabelanordnung 4 gemäß Fig. 2F. Das zugehörige Schweißwerkzeug 12, vorzugsweise das Rührreibschweißwerkzeug 12, weist eine Längserstreckung in einer orthogonal zur Längsachse L_{KL} der Kabellitzen 2 verlaufenden Schweißrichtung S auf, welche sich von einem äußeren seitlichen Rand 13 in Richtung zu einer Längsachse L_{W} des Schweißwerkzeuges 12 reduziert. Am stirnseitigen Ende 14 des Schweißwerkzeuges 12 ist insbesondere in der Variante der Fig. 5B eine Ausnehmung 15 mit einer Innenfläche ausgebildet, dessen Innendurchmesser sich vom äußeren seitlichen Rand 13 bis zur Längsachse L_{W} des Schweißwerkzeuges 12 konisch verjüngt.

Die in Fig. 6B dargestellte Variante einer Geometrie eines Schweißwerkzeuges 12, die zu einer Ausformung einer intermetallischen Phase 9 zwischen dem Kontaktelement 1 und den angrenzenden Kabellitzen 2 gemäß Fig. 6A führt, weist ebenfalls eine Längserstreckung in einer orthogonal zur Längsachse L_{KL} der Kabellitzen 2 verlaufenden Schweißrichtung S auf, welche sich von einem äußeren seitlichen Rand 13 in Richtung zu einer Längsachse L_{W} des Schweißwerkzeuges 12 reduziert. In Abgrenzung zur Variante in Fig. 5B geht die konisch geformte Innenfläche der Ausnehmung 15 am stirnseitigen Ende 14 des Schweißwerkzeuges 12 gemäß Fig. 6B in einen stiftförmigen Vorsprung 16 über, welcher rotationssymmetrisch zur Längsachse L_{W} des Schweißwerkzeuges 12 in Richtung der Schweißrichtung S ausgebildet ist.

Die in Fig. 7B dargestellte Variante einer Geometrie eines Schweißwerkzeuges 12, die zu einer Ausformung einer intermetallischen Phase 9 zwischen dem Kontaktelement 1 und den angrenzenden Kabellitzen 2 gemäß Fig. 7A führt, weist ebenfalls eine Längserstreckung in einer orthogonal zur Längsachse L_{KL} der Kabellitzen 2 verlaufenden Schweißrichtung S auf, welche sich von einem äußeren seitlichen Rand 13 in Richtung einer Längsachse L_{W} des Schweißwerkzeuges 12 reduziert. Am stirnseitigen Ende 14 der Variante des Schweißwerkzeuges 12 gemäß Fig. 7B ist am äußeren seitlichen Rand 13 ein rohrförmiger Vorsprung 17 ausgebildet an den sich eine konisch geformte Ausnehmung 15 in Richtung der Längsachse L_{W} des Schweißwerkzeuges 12 anschließt.

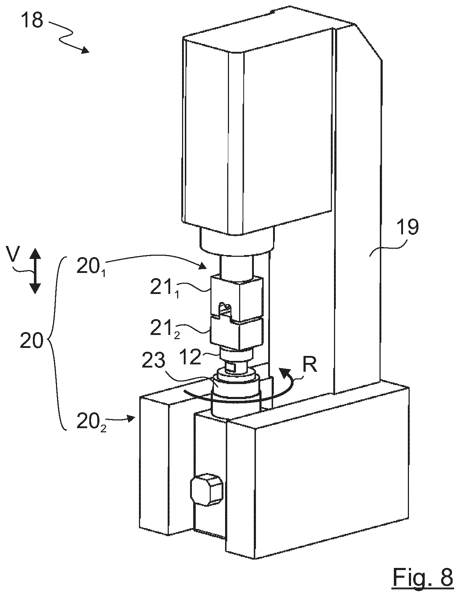

Aus Fig. 8 geht eine erfindungsgemäße Kabelkonfektionierungsvorrichtung 18 zur Herstellung einer Kabelanordnung 4 hervor, die einen Basiskörper 19 in Ständerausführung aufweist. Die Kabelkonfektionierungsvorrichtung 18 weist eine Presseinrichtung 20 auf, welche vorzugsweise als eine Crimpeinrichtung ausgeführt ist. Die als Crimpeinrichtung ausgeführte Presseinrichtung 20 ist ausgebildet, das Kontaktelement 1 der Kabelanordnung 4 mit den Kabellitzen 2 des Kabels 3 formschlüssig zu verpressen, vorzugsweise zu vercrimpen.

Die als Crimpeinrichtung ausgeführte Presseinrichtung 20 weist einen oberen Pressbereich 20₁, welcher in vertikaler Richtung V relativ zum Basiskörper 19 beweglich ist, und einen unteren Pressbereich 20₂ auf, welcher unbeweglich bzw. ortsfest zum Basiskörper 19 ausgebildet ist. An den oberen Pressbereich 20₁ ist ein zum Basiskörper 19 beweglich ausgebildetes oberes Presswerkzeug 21₁ befestigt, das vorzugsweise eine erste Crimpbacke eines Crimpwerkzeuges zur Bildung beispielsweise einer B-Crimpverbindung ist. An den unteren Pressbereich 20₂ ist mittelbar ein in vertikaler Richtung V zum Basiskörper 19 nicht beweglich ausgebildetes unteres Presswerkzeug 21₂ befestigt, das vorzugsweise eine zweite Crimpbacke eines Crimpwerkzeuges zur Bildung der beispielsweisen B-Crimpverbindung ist.

Zwischen dem unteren Presswerkzeug 21₂ und dem unteren Pressbereich 20₂ der Presseinrichtung 20 ist eine Einrichtung 23 zum punktförmigen Schweißen angeordnet, die vorzugsweise als eine Rührreibschweißeinrichtung ausgebildet ist. Die Einrichtung 23 zum punktförmigen Schweißen, die vorzugsweise eine Rührreibschweißeinrichtung ist, mit dem daran befestigten Schweißwerkzeug 12, das vorzugsweise als ein Rührreibschweißwerkzeug ausgebildet ist, ist in einer rotatorischen Richtung R und in einer axialen Richtung, d. h. in einer vertikalen Richtung V, beweglich. Das Schweißwerkzeug 12, vorzugsweise das Rührreibschweißwerkzeug, ist durch eine in der unteren Crimpbacke ausgebildete und in Fig. 8 nicht dargestellte Durchführung bis zu der zwischen der unteren und der oberen Crimpbacke eingespannten und verpressten bzw. vercrimpten Kabelanordnung 4 durchführbar, um eine Schweißverbindung zwischen dem Kontaktelement 1 und den Kabellitzen 2 der Kabelanordnung 4 zu realisieren.

Die vertikale Bewegung des oberen Pressbereichs 20₁ der Presseinrichtung 20 inklusive des daran befestigten oberen Presswerkzeuges 21₁ und der Schweißeinrichtung 23 inklusive des daran befestigten Schweißwerkzeuges 12 sowie die rotatorische Bewegung der Schweißeinrichtung 23 inklusive des daran befestigten Schweißwerkzeuges 12 erfolgt über zugehörige Antriebe, welche vorzugsweise als elektrische Antriebe ausgeführt sind. Über die zugehörige vorzugsweise elektrisch ausgebildete Steuerung und Regelung der einzelnen Antriebe und der einzelnen mechanisch, hydraulisch, pneumatisch oder elektrisch ausgebildeten Zusatzaggregate der Kabelkonfektionierungsvorrichtung 18 sei auf die zugehörige Fachliteratur verwiesen.

Auch wenn die vorliegende Erfindung anhand bevorzugter Ausführungsbeispiele vorstehend beschrieben wurde, ist sie darauf nicht beschränkt, sondern auf vielfältige Art und Weise modifizierbar.

## Patentansprüche

1. Kabelanordnung (4) aufweisend ein Kabel (3) mit Kabellitzen (2) und ein Kontaktelement (1), wobei ein Bereich (5) des Kontaktelements (1), der relativ zu einer Längsachsrichtung L_{KL} der Kabellitzen (2) seitlich zu den Kabellitzen (2) angeordnet ist, mit den angrenzenden Kabellitzen (2) stoffschlüssig verbunden ist, wobei der Bereich (5) eine kreisförmige Quererstreckung und eine Längserstreckung aufweist, die im Wesentlichen orthogonal zu einer Längsachse L_{KL} der Kabellitzen (2) orientiert ist,
**dadurch gekennzeichnet,**
**dass** der Bereich (5) ein zusammenhängender Bereich (5) des Kontaktelements (1) ist.

2. Kabelanordnung (4) nach Anspruch 1,
**dadurch gekennzeichnet,**
**dass** das stoffschlüssige Verbinden ein punktförmiges Schwei-ßen, vorzugsweise ein punktförmiges Rührreibschweißens, ist.

3. Kabelanordnung (4) nach Anspruch 1 oder 2,
**dadurch gekennzeichnet,**
**dass** im Bereich (5) ein Loch, vorzugsweise ein Durchgangsloch (10), ausgebildet ist, welches durch ein Schweißgefüge eines Metalls des Kontaktelements (1) und eines Metalls der Kabellitzen (2), vorzugsweise durch eine intermetallische Verbindung aus einem verschiedenen Metall des Kontaktelements (1) und der Kabellitzen (2), zumindest teilweise aufgefüllt ist.

4. Kabelanordnung (4) nach Anspruch 3,
**dadurch gekennzeichnet,**
**dass** sich das Durchgangsloch (10) zu einer Vertiefung (10') verlängert, welche von Kabellitzen (2) umgeben ist, wobei die Vertiefung (10') vorzugsweise in einem äußeren Durchmesserbereich (10ₐ') eine größere Tiefe als in einem benachbarten inneren Durchmesserbereich (10ᵢ') aufweist.

5. Kabelanordnung (4) nach Anspruch 3 oder 4,
**dadurch gekennzeichnet,**
**dass** eine Quererstreckung des Loches bzw. des Durchgangsloches (10) kleiner, vorzugsweise um einen Faktor zwischen 0,7 und 0,9 kleiner, insbesondere vorzugsweise um einen Faktor zwischen 0,8 und 0,9 kleiner, als die kreisförmige Quererstreckung des Bereiches (5) ausgebildet ist.

6. Kabelanordnung (4) nach einem der Ansprüche 1 bis 5, **dadurch gekennzeichnet,**
**dass** die Kabellitzen (2) aus Aluminium oder einer Aluminiumlegierung hergestellt sind.

7. Kabelanordnung (4) nach einem der Ansprüche 1 bis 6, **dadurch gekennzeichnet,**
**dass** das Kontaktelement (1) aus einem Buntmetall oder einer Buntmetalllegierung, vorzugsweise aus Kupfer oder einer Kupferlegierung, hergestellt ist.

8. Kabelanordnung (4) nach einem der Ansprüche 1 bis 7, **dadurch gekennzeichnet,**
**dass** die Kabellitzen (2) mit dem Kontaktelement (1) verpresst, vorzugsweise vercrimpt, sind, wobei das Crimpen vorzugsweise als eine offene Crimpverbindung und insbesondere vorzugsweise als eine B-Crimpverbindung ausgebildet ist.

9. Kabelanordnung (4) nach einem der Ansprüche 1, 2 oder 6 bis 8,
**dadurch gekennzeichnet,**
**dass** im Bereich (5) außenseitig ein rotationssymmetrischer Abdruck, vorzugsweise ein kreisscheibenförmiger oder ein ringförmiger Abdruck, eines Schweißwerkzeuges ausgebildet ist.

10. Verfahren zur Herstellung einer Kabelanordnung (4) aus einem Kabel (3) und einem Kontaktelement (1) aufweisend folgende Verfahrensschritte:
- Bereitstellen des Kabels (3) und des Kontaktelements (1),
- Positionieren des Kontaktelements (1) derart zum Kabel (3), dass ein zusammenhängender Bereich (5) des Kontaktelements (1) relativ zu einer Längsachsrichtung L_{KL} der Kabellitzen (2) seitlich zu den Kabellitzen (2) angeordnet ist, und
- stoffschlüssiges Verbinden des zusammenhängenden Bereichs (5) des Kontaktelements (1) mit den angrenzenden Kabellitzen (2), wobei der zusammenhängende Bereich (5) eine kreisförmige Quererstreckung und eine Längserstreckung aufweist, die im Wesentlichen orthogonal zur Längsachse L_{KL} der Kabellitzen (2) orientiert ist.

11. Verfahren zur Herstellung einer Kabelanordnung (4) nach Anspruch 10,
**dadurch gekennzeichnet,**
**dass** das stoffschlüssige Verbinden ein punktförmiges Schwei-ßen, vorzugsweise ein punktförmiges Rührreibschweißens, in einer im Wesentlichen orthogonalen Richtung zur Längsachse L_{KL} der Kabellitzen (2) ist.

12. Verfahren zur Herstellung einer Kabelanordnung (4) nach Anspruch 10 oder 11,
**dadurch gekennzeichnet,**
**dass** vor dem stoffschlüssigen Verbinden oder zumindest teilweise während des stoffschlüssigen Verbindens ein Verpressen, vorzugsweise ein Crimpen, der Kabellitzen (2) mit dem Kontaktelement (1) stattfindet.

13. Kabelkonfektionierungsvorrichtung (18) zur Herstellung einer Kabelanordnung (4) aus einem Kontaktelement (1) und einem Kabel (3), wobei eine Einrichtung (23) zum punktförmigen Schweißen, vorzugsweise eine punktförmige Rührreibschweißeinrichtung, vorgesehen und ausgebildet ist, um einen zusammenhängenden Bereich (5) des Kontaktelements (1) mit relativ zu einer Längsachsrichtung L_{KL} von Kabellitzen (2) des Kabels (3) seitlich angrenzenden Kabellitzen (2) in einer im Wesentlichen orthogonalen Richtung zur Längsachse L_{KL} der Kabellitzen (2) stoffschlüssig zu verbinden.

14. Kabelkonfektionierungsvorrichtung (18) zur Herstellung einer Kabelanordnung (4) nach Anspruch 13,
**dadurch gekennzeichnet,**
**dass** zusätzlich eine Presseinrichtung (20), vorzugsweise eine Crimpeinrichtung, vorgesehen und ausgebildet ist, um die Kabellitzen (2) im Kontaktelement (1) zu verpressen bzw. zu crimpen.

15. Kabelkonfektionierungsvorrichtung (18) nach Anspruch 13 oder 14,
**dadurch gekennzeichnet,**
**dass** die Einrichtung (23) zum punktförmigen Schweißen, vorzugsweise die punktförmige Rührreibschweißeinrichtung, ein rotationssymmetrisches Schweißwerkzeug (12) aufweist, an dessen stirnseitigem Ende (14) eine rotationssymmetrische Ausnehmung (15) derart ausgebildet ist, dass sich radial außenseitig ein kreisförmiger Grat oder ein rohrförmiger Vorsprung bildet.
